# EUROPEAN PATENT APPLICATION

(11) **EP 4 465 424 A2**
(43) Date of publication of application: **20.11.2024**
(21) Application number: 23796804.5
(22) Date of filing: 27.04.2023
(51) Int. Cl.: H01M 50/204, H01M 50/271, H01M 50/289, H01M 50/502, H01M 10/04

(54) **CELL STACK ASSEMBLY, AND BATTERY PACK COMPRISING CELL STACK ASSEMBLY**

(30) Priority: 29.04.2022 KR 20220053655
(71) Applicant: LG Energy Solution, Ltd., Seoul 07335 (KR)
(72) Inventor: SHIN, Ju Hwan, Daejeon 34122 (KR); LEE, Jae Hyun, Daejeon 34122 (KR); LEE, Hyoung Suk, Daejeon 34122 (KR)
(74) Representative: Plasseraud IP
(86) International application number: PCT/KR2023/005717
(87) International publication number: WO 2023/211161

(57) **Abstract**

A cell stack assembly and a battery pack including the cell stack assembly includes a cell stack in which a plurality of battery cells are stacked; busbar frames comprising a busbar electrically connected to the battery cells and respectively closely coupled to the front and rear of the cell stack; end plates coupled to the busbar frames to cover the busbar; and support blocks respectively coupled to both sides of the end plates to cover sides of the outermost battery cells of the cell stack.

## Description

### [Technical Field]

The present invention relates to a cell stack assembly comprising a plurality of battery cells stacked together, and a battery pack comprising the cell stack assembly, and more specifically, the present invention is characterized by removing from the battery pack a partition wall for compartmentalizing the cell stack assembly, and by utilizing a support block configuration that can replace the partition wall to increase space utilization within the battery pack.

This application claims the benefit of priority based on Korean Patent Applications No. 10-2022-0053655, filed on April 29, 2022, the disclosure of which is incorporated herein by reference in its entirety.

### [Background Art]

The types of secondary batteries that are currently widely used include lithium-ion batteries, lithium-polymer batteries, nickel-cadmium batteries, nickel-metal hydride batteries, nickel-zinc batteries, etc. The operating voltage of these individual secondary battery cells, i.e., unit cells, is approximately 2.5V to 4.5V. Therefore, when a higher output voltage is required, a plurality of battery cells may be connected in series to form a battery pack. Additionally, depending on the required charging and discharging capacity of the battery pack, a battery pack may be formed by connecting a plurality of battery cells in parallel. Thus, the number of battery cells included in the battery pack may be varied depending on the required output voltage or charging/discharging capacity.

Meanwhile, when constructing a battery pack by connecting a plurality battery cells in series or parallel, it is common to first create a battery module that includes at least one battery cell, and then add other components using the at least one battery module to construct a battery pack.

In conventional battery modules, typically, there is at least one cell stack containing battery cells and a box-shaped metal housing structure, such as a module frame, that accommodates at least one of these cell stacks. In such conventional battery module structures, the energy density of the entire battery pack is reduced due to the weight or volume of the module frame itself, and there is a problem of the weight of the entire battery pack being increased.

In an attempt to address the aforementioned issues, the conventional module frame structure that wraps and protects the cell stack has been excluded. Instead, in the cell stack, a method of storing and disposing it in a battery pack was attempted only in a configuration coupling a busbar frame and an end plate on the front and back sides, respectively, where the electrode leads are formed.

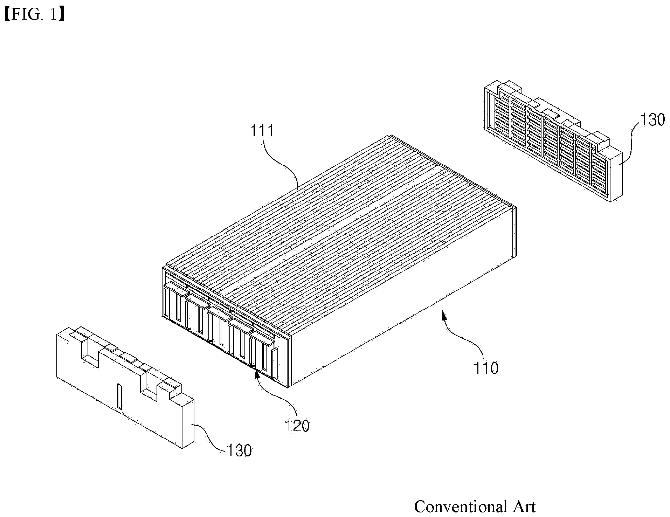

FIG. 1 is a perspective view of a cell stack assembly that excludes a module frame and includes a cell stack, a busbar frame, and an end plate. However, a cell stack assembly of the structure shown in FIG. 1 is difficult to handle and is not easily fixed inside a battery pack.

Therefore, there is a need to explore solutions for providing a cell stack assembly that can further increase energy density by reducing overall weight through lightweighting and that is easy to fix and handle, and a battery pack including the cell stack assembly.

### [Description of the technology]

### [Technical Problem]

Thus, the present invention aims to increase the space utilization inside the battery pack by excluding the traditional module frame.

Furthermore, the present invention aims to provide a structure that supports a cell stack of a plurality of battery cells stacked without a module frame, and for coupling and fixing the cell stack to a battery pack.

Furthermore, the present invention aims to provide a structure for connecting and fixing a plurality of cell stacks, respectively.

Other objectives and advantages of the present invention will be understood from the following description and will become more apparent through the embodiments of the present invention. Additionally, the objectives and advantages of the present invention can be easily understood by the means and combinations thereof as expressed in the claims of the patent.

### [Technical Solution]

According to an aspect of the present invention, a cell stack assembly includes: a cell stack in which a plurality of battery cells are stacked; busbar frames including a busbar electrically connected to the cell stack and respectively coupled to a front and a rear of the cell stack; end plates coupled to the busbar frames to cover the busbar; and support blocks respectively coupled to sides of the end plates to cover sides of outermost battery cells of the cell stack, wherein the support blocks include fastening holes at an upper part and a lower part of the support blocks.

The fastening holes can be spaced along a longitudinal direction of each support block.

The fastening holes of the support blocks on opposites sides of the cell stack are aligned with each other.

The cell stack assembly further includes a cover that is coupled to the support blocks to cover at least one of an upper part and a lower part of the cell stack, wherein the cover may include through holes corresponding to the fastening holes of the support blocks where the cover contacts and is coupled to the support block.

The support blocks and the cover may be screw coupled to each other by bolts which are inserted through the through holes and into the fastening holes.

According to another aspect of the present invention, the battery pack includes a plurality of cell stack assemblies mentioned above, and a pack case in which the plurality of cell stack assemblies are disposed, wherein the plurality of cell stack assemblies are arranged such that a support block on at least one side of each cell stack assembly faces a support block on a side of a neighboring cell stack assembly.

The pack case includes bottom holes passing through a bottom of the pack case at locations corresponding to the fastening holes formed at the lower part of the support blocks, wherein the plurality of cell stack assemblies may be coupled to the pack case by bolts inserted into the fastening holes and the bottom holes.

In addition, the pack case further includes a fixing member coupled to the support blocks of at least two cell stack assemblies of the plurality of cell stack assemblies, wherein the fixing member includes fixing holes at a location corresponding the fastening holes in each of the at least two cell stack assemblies, and wherein the fixing member may be screw coupled to the support blocks by bolts inserted into the fastening holes corresponding to the fixing holes.

The fixing members may be coupled at each end to two adjacent support blocks to fix a pair of cell stack assemblies of the at least two cell stack assemblies.

The fixing member extends along a longitudinal direction of two adjacent support blocks of the at least two cell stack assemblies, wherein the fixing holes are spaced apart along a longitudinal direction of the fixing member to correspond to the fastening holes of the two adjacent support blocks.

The fixing member is coupled to at least four support blocks of the at least two cell stack assemblies.

The fixing member extends across a cell stack included in the of the at least two cell stack assemblies to support an upper part of the cell stack.

The pack case includes: a bottom plate supporting a lower part of the plurality of cell stack assemblies disposed in the pack case; and side walls extending along edges of the bottom plate to laterally surround the plurality of cell stack assemblies, wherein an inner surface of the side walls comprises a seating portion protruding toward the plurality of cell stack assemblies, wherein each support block of the plurality of cell stack assemblies comprises a protrusion protruding from at least one of a front side and a rear side of the plurality of cell stack assemblies, and wherein each protrusion is seated on the seating portion of the side wall.

The seating portion includes seating holes at an upper part of the seating portion, each protrusion includes a protruding hole, and the plurality of cell stack assemblies may be screw coupled to the side walls by bolts inserted into the protruding holes and the seating holes.

### [Advantageous Effects]

According to the present invention, the energy density of the battery pack can be increased by improving the utilization of space inside the battery pack.

### [Brief Description of the Drawings]

FIG. 1 shows a conventional cell stack assembly.
FIG. 2 is an exploded perspective view of a cell stack assembly according to an embodiment of the present invention.
FIG. 3 is a perspective view of a cell stack assembly according to an embodiment of the present invention.
FIG. 4 is a perspective view of a cover and a cell stack assembly according to an embodiment of the present invention.
FIG. 5 is a perspective view of a cell stack assembly with an upper cover and a lower cover coupled to a support block according to an embodiment of the present invention.
FIG. 6 is a cross-sectional view of the cell stack assembly of FIG. 5.
FIG. 7 is a perspective view of a battery pack according to an embodiment of the present invention.
FIG. 8 is a perspective view of a pair of cell stack assemblies disposed adjacent to each other according to an embodiment of the present invention.
FIG. 9 is a perspective view of a pack case from a lower side according to an embodiment of the present invention.
FIG. 10 illustrates a support block according to an embodiment of the present invention.
FIG. 11 illustrates a cell stack assembly and pack case in which the support block of FIG. 10 is applied.
FIG. 12 is a plan view of a battery pack including a cell stack assembly with the support block of FIG. 1 1(a) and a pack case in which the cell stack assembly is disposed.
FIG. 13 illustrates a fixing member and cell stack assembly included in a battery pack according to an embodiment of the present invention.
FIG. 14 is a perspective view of a pair of cell stack assemblies with the fixing member of FIG. 13.
FIG. 15 is a plan view of a battery pack including the cell stack assembly of FIG. 13 with the fixing member, and a pack case in which the cell stack assembly is disposed.
FIG. 16 illustrates a fixing member and cell stack assemblies in a battery pack according to another embodiment of the present invention.
FIG. 17 illustrates a fixing member and cell stack assemblies in a battery pack according to still another embodiment of the present invention.

### [Best Mode for Carrying Out the Invention]

Hereinafter, preferred embodiments of the present invention will be described in detail with reference to the accompanying drawings. Before doing so, it should be noted that the terms and words used in this specification and claims are not to be construed in their ordinary or dictionary sense, but rather in a sense and concept consistent with the technical idea of the invention, based on the principle that the inventor may properly define the concept of a term to best describe his invention.

Accordingly, it is to be understood that the embodiments described herein and the configurations illustrated in the drawings are only the most preferred embodiments of the present invention and do not represent all of the technical ideas of the present invention, and that there may be various equivalents and modifications that may be substituted for them at the time of filing.

Furthermore, in describing the present invention, where it is deemed that a detailed description of relevant prior art configurations or features would obscure the essence of the present invention, such detailed description is omitted.

Since the embodiments of the present invention are provided to more fully illustrate the invention to those of ordinary skill in the art, the shapes and sizes of the components in the drawings may be exaggerated, omitted, or shown schematically for clarity. Accordingly, the dimensions or proportions of each component are not intended to be entirely representative of actual dimensions or proportions.

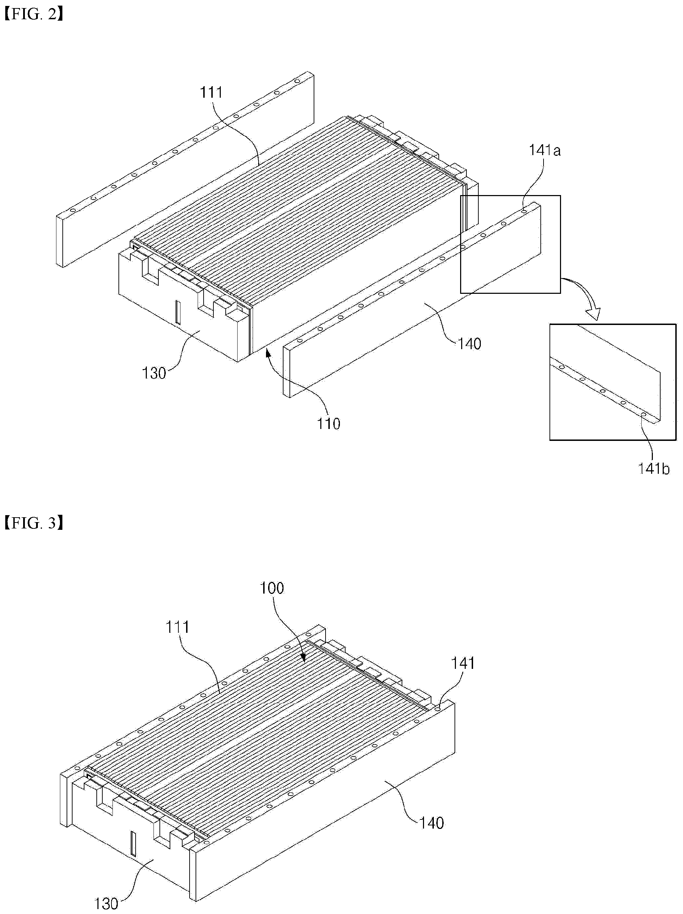

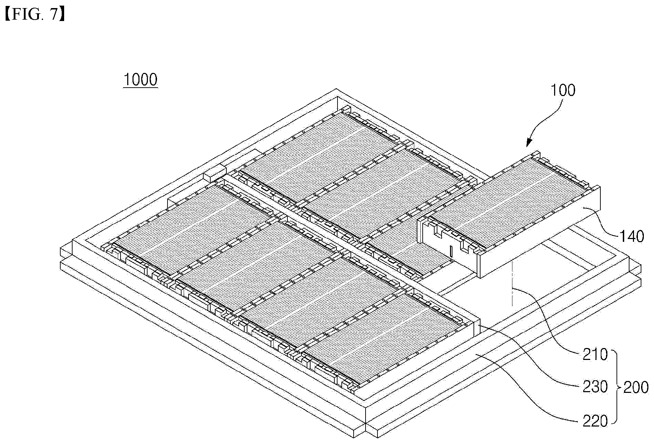

The present invention relates to a cell stack assembly and a battery pack comprising the cell stack assembly. Hereinafter, the cell stack assembly according to an embodiment of the present invention will be described with reference to FIGS. 2 through 6, and the battery pack according to an embodiment of the present invention will be described with reference to FIGS. 7 through 17.

### Cell Stack Assembly 100

FIG. 2 is an exploded perspective view of a cell stack assembly 100 according to an embodiment of the present invention, and FIG. 3 is a perspective view of a cell stack assembly 100 according to an embodiment of the present invention.

Referring to FIGS. 2 and 3, the cell stack assembly 100 of the embodiment comprises a cell stack 110, a busbar frame 120, an end plate 130, and a support block 140.

The cell stack 110 includes a plurality of stacked battery cells 111. Each of the battery cells 111 includes an electrode assembly therein, a pair of electrode leads electrically connected to the electrode assembly, and a battery case enclosing the electrode assembly such that the electrode leads are drawn outwardly. In this case, the electrode leads may be drawn out from both sides of the battery case.

The busbar frame 120 includes a busbar (not shown) electrically connected to the battery cell 111.

The busbar frame 120 may be tightly coupled to the cell stack 110 at the front side and rear side of the cell stack 110 such that the electrode leads of each battery cell 111 included in the cell stack 110 are connected to the busbar.

The end plate 130 is coupled with the busbar frame 120 covering the busbar 121 to protect the busbar 121 and electrode leads and the like from external impact.

Furthermore, the end plate 130 collectively fixes each of the battery cells 111 included in the cell stack 110.

The support blocks 140 are coupled to both sides of the end plate 130, as shown in FIG. 3, to cover corresponding sides of the battery cell 111 located at the outermost edge of the cell stack 110.

The support block 140 may include the same material as a partition wall that is conventionally installed to partition the interior of the battery pack 1000 and isolate each battery module. The support block 140 may preferably include a flame retardant material and/or a heat resistant material.

The support block 140 may be screw coupled to the end plate 130, or may be coupled to the end plate 130 by methods such as adhesion and heat-sealing.

The support blocks 140, while being coupled with the end plate 130, are in close contact with the battery cells 111 located at the outermost edge of the cell stack 110, thereby protecting the cell stack 110.

The support block 140 includes a fastening hole 141 into which bolts B can be inserted in the upper and lower parts, as shown in FIG. 2.

A plurality of the fastening holes 141 may be formed at predetermined spacings along the longitudinal direction of the support block 140.

The fastening holes 141 formed in each of the support blocks 140 may be provided in positions opposite to each other with the cell stack 110 intervening therebetween.

The fastening hole 141 may include an upper fastening hole 141a on an upper part of the support block 140 and a lower fastening hole 141b on a lower part of the support block 140.

The upper fastening hole 141a and the lower fastening hole 141b on the upper and lower parts of the support block 140, respectively, may be separated from each other, or may be connected to each other by penetrating the support block 140 in the thickness direction.

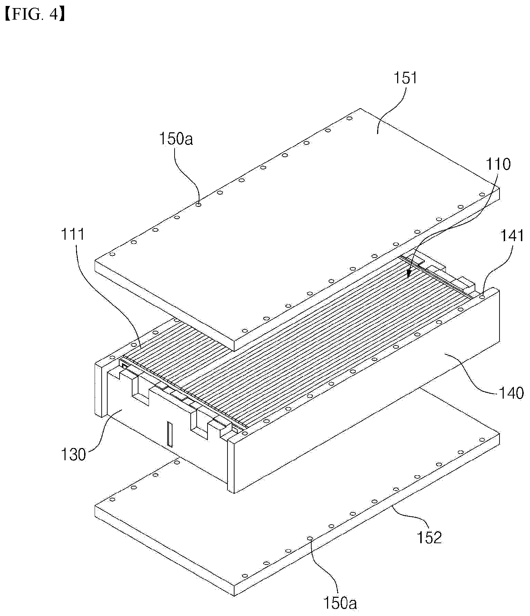

FIG. 4 illustrates a cell stack assembly 100 and a cover 150 that can be coupled to the cell stack assembly 100 according to an embodiment of the present invention.

As shown in FIG. 4, the cell stack assembly 100 according to the embodiment may further include a cover 150. The cover 150 can be coupled to the support block 140 to cover at least one of upper and lower parts of the cell stack 110 that are open to the outside.

The cover 150 may include through holes corresponding to the fastening holes 141 of the support block 140 in the area where it abuts and couples to the support block 140. That is, the cover 150 may include through holes perforated on both edges for bolts B to pass through.

The cover 150 may include an upper cover 151 coupled to the support block 140 at an upper part of the cell stack assembly 100, and a lower cover 152 coupled to the support block 140 at a lower part of the cell stack assembly 100.

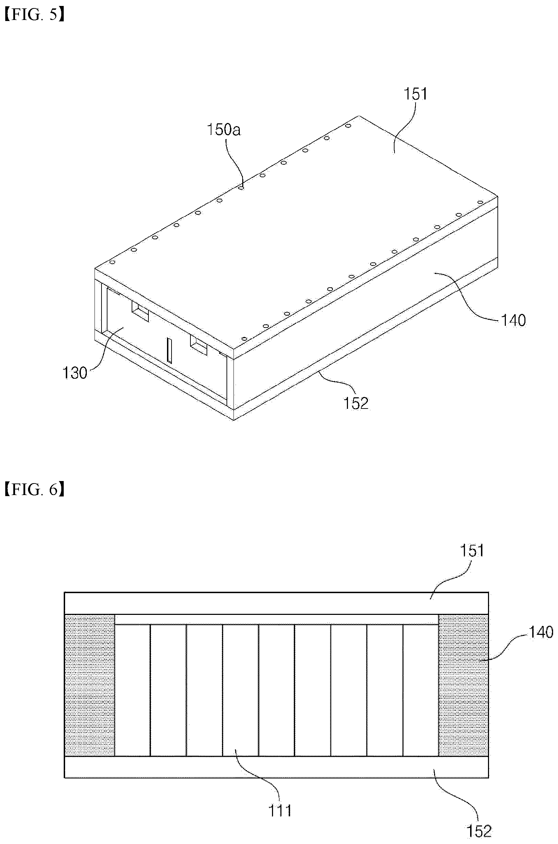

FIG. 5 is a perspective view of a cell stack assembly 100 with an upper cover 151 and a lower cover 152 coupled to a support block 140 according to an embodiment of the present invention.

As shown in FIG. 5, the upper cover 151 is coupled to an upper surface of the support block 140, and the lower cover 152 is coupled to a lower surface of the support block 140.

The upper cover 151 and the lower cover 152 may be screw coupled to the support block 140 by bolts B inserted through the through holes and into fastening holes 141 formed in the upper and lower parts of the support block 140, respectively.

In the cell stack assembly 100, the cover 150 may be temporarily used to protect the cell stack 110 when it is open to the outside, and may be separated from the cell stack assembly 100 at any time as needed.

FIG. 6 is a cross-sectional view of the cell stack assembly 100 of FIG. 5.

The lower cover 152 may be coupled with the support block 140 at the lower part of the cell stack 110 to support the lower part of the cell stack 110 so as to prevent the cell stack 110 from sagging downward. Furthermore, the cell stack 110 may be enclosed and protected from the outside by the support block 140 covering two sides, end plates 130 covering the front and back, and a cover 150 covering the upper and lower parts.

### Battery Pack 1000

A battery pack 1000 according to an embodiment of the present invention includes a cell stack assembly 100 according to embodiments of the present invention, and a pack case 200 in which the cell stack assembly 100 is disposed. In addition, the battery pack 1000 according to the embodiment of the present invention may further include a pack case cover (not shown) coupled to the pack case 200 to cover an upper part of the cell stack assembly 100 at an upper part of the pack case 200, as needed.

FIG. 7 illustrates a battery pack 1000 according to the embodiment of the present invention, with a plurality of cell stack assemblies 100 disposed within the pack case 200.

Specifically, the pack case 200 includes a lower plate 210 supporting a lower part of the disposed cell stack assembly 100 and side walls 220 along edges of the lower plate 210 to laterally surround the plurality of the cell stack assembles 100.

The plurality of the cell stack assemblies 100 may be disposed within the pack case 200 such that at least one support block 140 of a cell stack assembly 100 faces a support block 140 of another cell stack assembly 100 neighboring thereto.

The pack case 200 may include a center partition wall 230 across its center, and the cell stack assembly 100 may be disposed symmetrically about the center partition wall 230 as shown in FIG. 7.

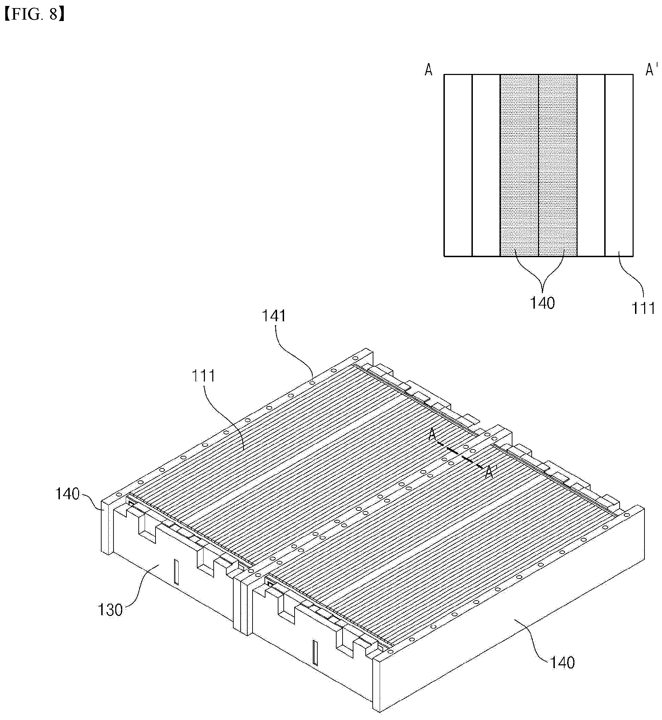

FIG. 8 is a perspective and partial cross-sectional view of a pair of cell stack assemblies 100 disposed adjacent to each other within the pack case 200.

As shown in FIG. 8, the support blocks 140 of neighboring cell stack assemblies 100 preferably have fastening holes 141 formed in corresponding positions to each other. That is, fastening holes 141 included in the neighboring support blocks 140 are formed in the same position along the longitudinal direction of the support blocks 140.

The cell stack assemblies 100 disposed in the pack case 200 may be coupled and secured with the pack case 200.

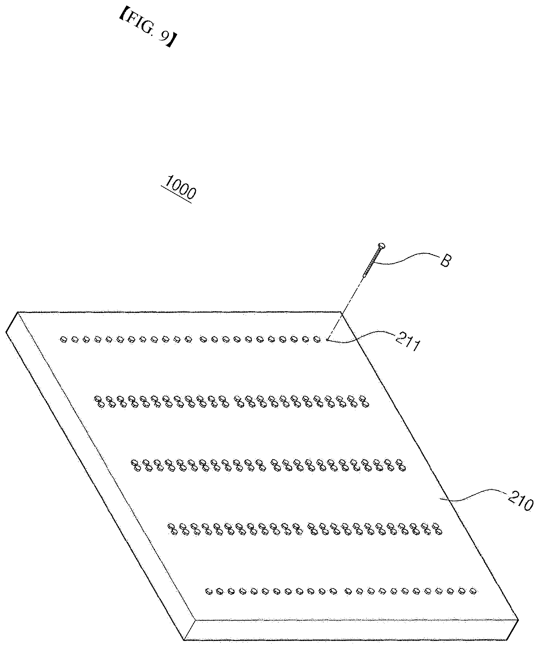

FIG. 9 is a perspective view of a battery pack 1000 from a lower side according to an embodiment of the present invention.

The pack case 200 according to the embodiment of the present invention may include a bottom hole 211 passing through the bottom at locations corresponding to the fastening holes 141 formed in the lower part of the cell stack assembly 100. Specifically, the bottom hole 211 may pass through the lower plate 210 of the pack case 200 at a location corresponding to a lower fastening hole 141b formed in the lower part of a support block 140 in the cell stack assembly 100 disposed in the pack case 200.

Each cell stack assembly 100 disposed in the pack case 200 may be fixed to the pack case 200 by bolts B passing through bottom holes 211 of the pack case 200 and inserted into the fastening holes 141 formed in the support block 140, as shown in FIG. 9.

Although not illustrated, for convenience, the bolts B may also be inserted into bottom holes 211 of the bottom plate 210 by passing through the upper fastening holes 141a and the lower fastening holes 141b of the support block 140 to fix the cell stack assembly 100 to the pack case 200.

The support block 140 according to an embodiment of the present invention may include protrusions 142 protruding from at least one of a front side and a rear side of the cell stack assembly 100. Additionally, an inner surface of the side wall 220 in the pack case 200 may include a seating portion 221 protruding toward the cell stack assembly 100.

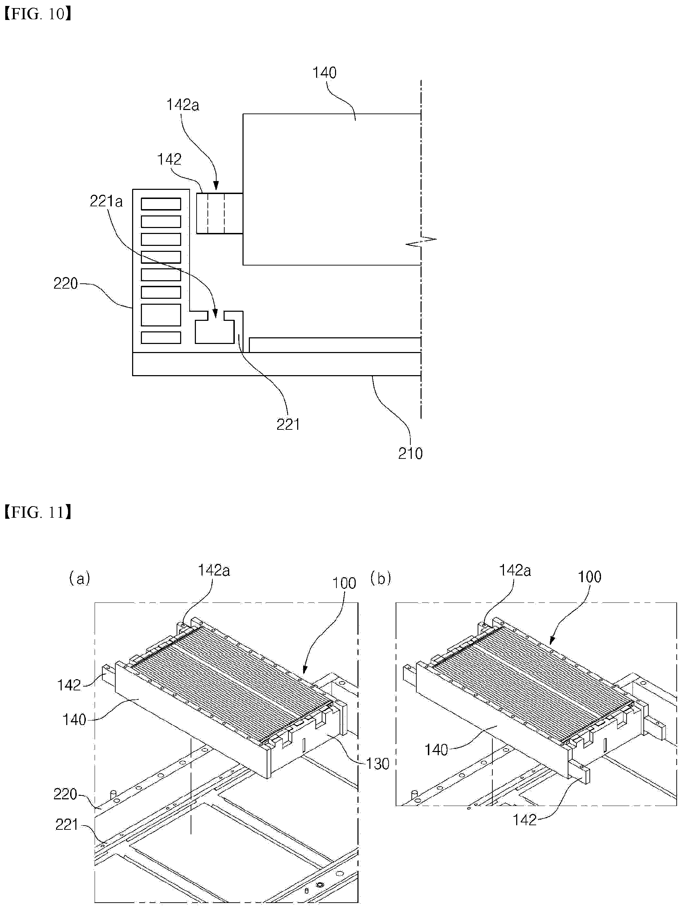

FIG. 10 illustrates the support block 140 according to the embodiment of the present invention, more specifically a partial cross-sectional view of a pack case 200 including the seating portion 221 and a cell stack assembly 100 disposed in the pack case 200.

Referring to FIG. 10, the cell stack assembly 100 is disposed in the pack case 200 such that the protrusion 142 is seated on the seating portion 221 of the side wall 220.

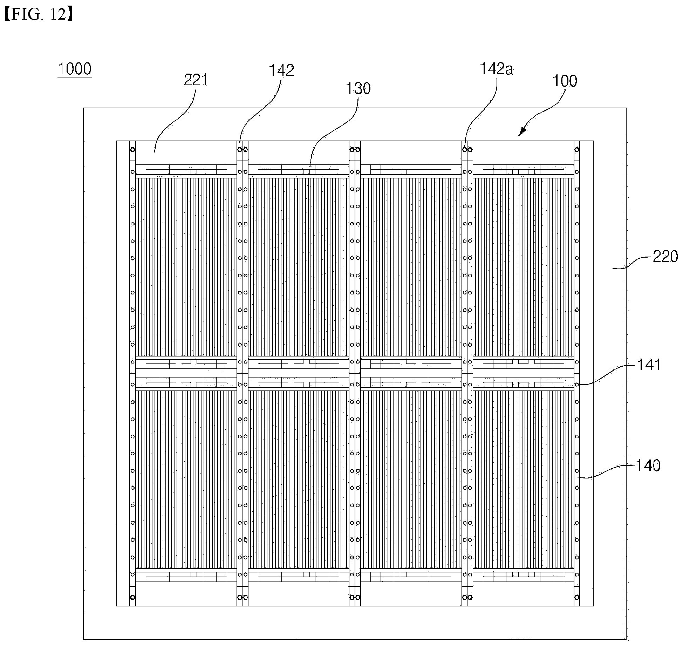

FIG. 11 illustrates a cell stack assembly 100 having protrusions 142 formed on one or both sides of the support block 140 and a part of a pack case 200, and FIG. 12 is a plan view of a battery pack 1000 in which the cell stack assembly 100 of FIG. 1 1(a) is disposed within the pack case 200.

Referring to FIG. 11, the cell stack assembly 100 may be provided with the protrusions 142 protruding at one side of the support block 140 toward the side wall 220 of the pack case 200 (FIG. 1 1(a)), or with the protrusions 142 protruding at both sides of the support block 140 (FIG. 11(b)).

Referring to FIG. 12, each cell stack assembly 100 is disposed within the pack case 200 with the protrusions 142 facing the side wall 220.

The cell stack assembly 100 may be fixed to the pack case 200 in a manner that a protrusion 142 of the support block 140 is screw coupled with a seating portion 221 of the side wall 220. Specifically, the seating portion 221 may include a seating hole 221a into which a bolt B can be inserted at the upper part, as shown, and the protrusion 142 may include a protruding hole 142a into which a bolt B can penetrate and be coupled.

The cell stack assembly 100 may be screw coupled with the side wall 220 by bolts B inserted into the protruding holes 142a and seating holes 221a.

The battery pack 1000 may further include a fixing member 300 coupled to the support blocks 140 of the cell stack assembly 100 to fix at least two or more cell stack assemblies 100 disposed in the pack case 200. More specifically, the fixing member 300 may include fixing holes 300a at locations corresponding to the fastening holes 141 of each of the support blocks 140. Furthermore, the fixing member 300 may be screw coupled with the support blocks 140 by bolts B inserted into the fixing holes 300a and into the fastening holes 141 corresponding to the fixing holes 300a.

By the coupling, each cell stack assembly 100 is fixedly connected to each other.

The battery pack 1000 according to embodiments of the present invention can be modified based on the shape of the fixing member 300.

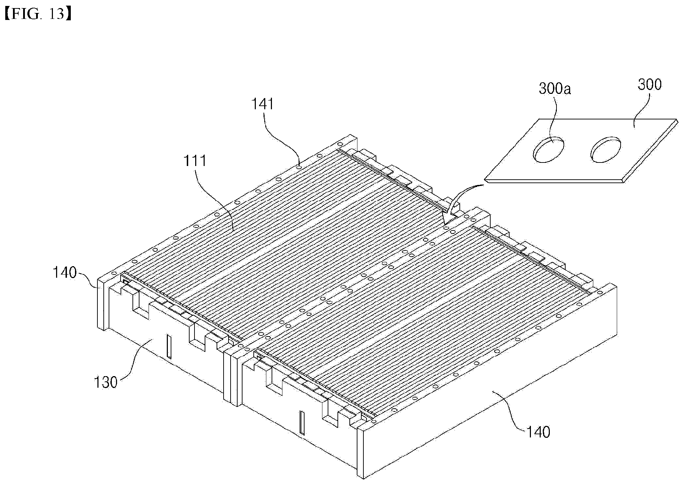

Hereinafter, the battery pack 1000 according to embodiments of the present invention will be described with reference to FIGS. 13 through 17.

### (First embodiment)

The fixing member 300 in the battery pack 1000 according to a first embodiment of the present invention may be coupled at both ends to two adjacent support blocks 140.

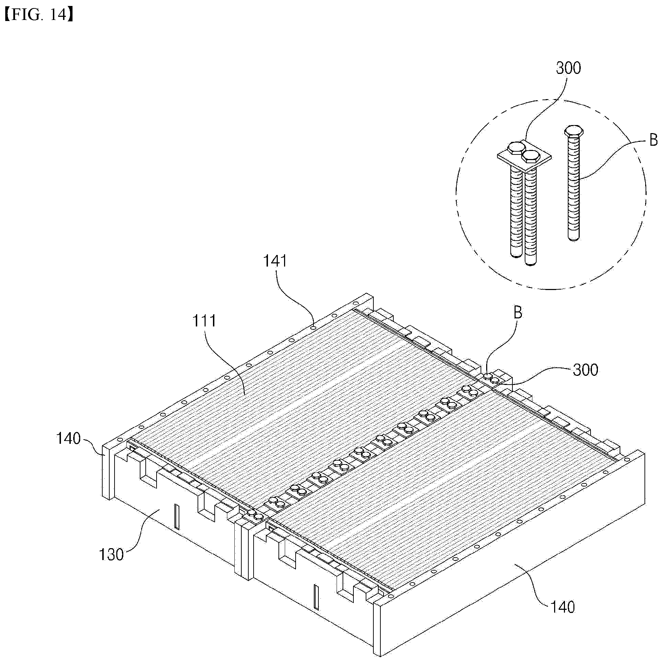

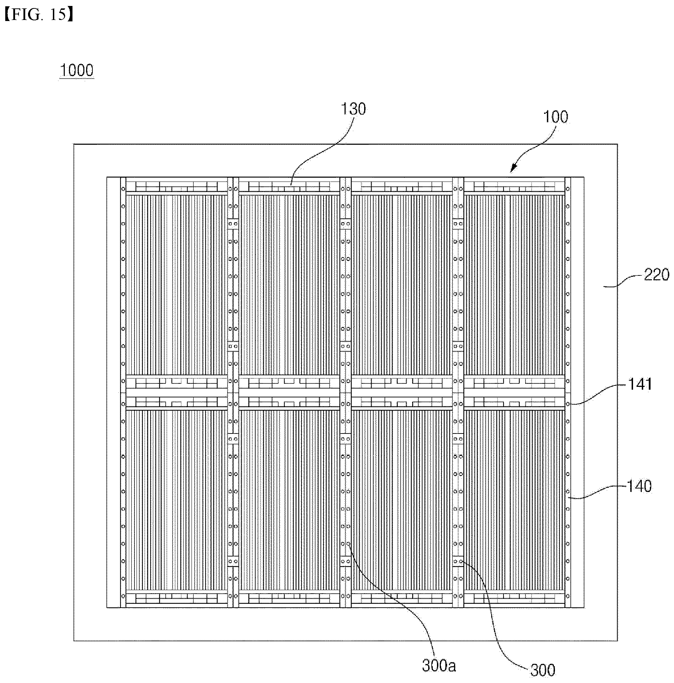

FIG. 13 illustrates a configuration of a pair of neighboring cell stack assemblies 100 and a fixing member 300 of the battery pack 1000 according to the first embodiment, FIG. 14 is a perspective view of a pair of cell stack assemblies 100 coupled by the fixing member 300 of FIG. 13, and FIG. 15 is a plan view of a battery pack 1000 with each cell stack assembly 100 connected by the fixing member 300 of FIG. 13 and disposed within the pack case 200.

The fixing member 300 in the battery pack 1000 according to the first embodiment of the present invention may include a pair of fixing holes 300a perforated for bolts B to pass through.

The fixing member 300 is positioned on the support blocks 140 such that each of the fixing holes 300a corresponds to a respective fastening hole 141 in two adjacent support blocks 140, as shown in FIG. 14, and is screw coupled to each support block 140 by bolts B inserted into the fixing holes 300a and fastening holes 141.

Adjacent pairs of cell stack assemblies 100 are coupled to each other as the fixing members 300 are screwed with each support block 140.

### (Second embodiment)

The fixing member 300 in the battery pack 1000 according to the second embodiment of the present invention may extend along the longitudinal direction of the support blocks 140 and is coupled at both ends to two adjacent support blocks 140.

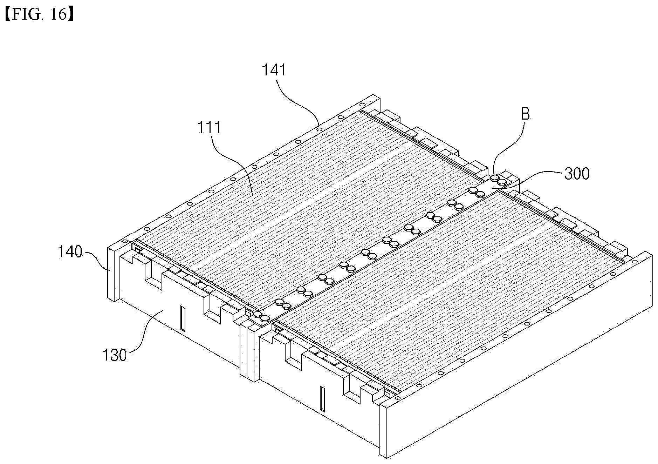

FIG. 16 illustrates a configuration of a pair of neighboring cell stack assemblies 100 and the fixing member 300 of the battery pack 1000 according to the second embodiment.

The fixing member 300 in the battery pack 1000 according to the second embodiment of the present invention may include a plurality of fixing holes 300a for the bolt B to penetrate.

The fixing member 300 may extend along the longitudinal direction of the support blocks 140 as shown in FIG. 16 and include a plurality of fixing holes 300a to correspond to the fastening holes 141 of each support block 140 along the extending direction. That is, the fixing holes 300a are spaced apart one another at predetermined spacings along the longitudinal direction of the fixing member 300 to correspond to the fastening holes 141 of each support block 140.

The fixing member 300 may firmly fix the pair of cell stack assemblies 100 by means of a plurality of bolts B inserted into the fixing holes 300a formed to correspond to the fastening holes 141.

### (Third Embodiment)

The fixing member 300 in the battery pack 1000 according to a third embodiment of the present invention may extend in a direction across the cell stack 110 included in the cell stack assembly 100. The fixing member 300 may be coupled to a plurality of support blocks 140. More specifically, the fixing member 300 may extend to be coupled with at least four or more support blocks 140.

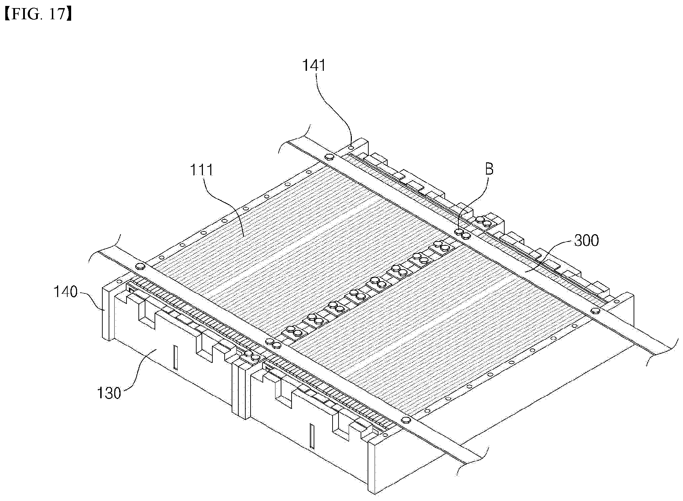

FIG. 17 illustrates a configuration of a pair of neighboring cell stack assemblies 100 and a fixing member 300 of a battery pack 1000 according to the third embodiment.

The fixing member 300 in the battery pack 1000 according to the third embodiment of the present invention may include a plurality of fixing holes 300a for the bolt B to penetrate.

The fixing member 300 may extend in a direction across the cell stack 110 and the support blocks 140 as shown in FIG. 17, and include a plurality of fixing holes 300a arranged along the extending direction corresponding to the fastening holes 141 of each support block 140. That is, the fixing holes 300a are spaced apart one another at predetermined spacings along the longitudinal direction of the fixing member 300 to correspond to the fastening holes 141 of each support block 140.

The fixing member 300 can fix a plurality of cell stack assemblies 100 by a plurality of bolts B inserted into the fixing holes 300a formed to correspond to the fastening holes 141, and can also support an upper part of a cell stack 110 received in the fixed cell stack assemblies 100.

The fixing members 300 in the battery pack 1000 according to the above three embodiments may be mixedly employed within a single battery pack 1000 as desired.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

## Claims

1. A cell stack assembly comprising:
a cell stack in which a plurality of battery cells are stacked;
busbar frames comprising a busbar electrically connected to the cell stack and respectively coupled to a front and a rear of the cell stack;
end plates coupled to the busbar frames to cover the busbar; and
support blocks respectively coupled to sides of the end plates to cover sides of outermost battery cells of the cell stack,
wherein the support blocks comprise fastening holes at an upper part and a lower part of the support blocks.

2. The cell stack assembly of claim 1, wherein the fastening holes are spaced along a longitudinal direction of each support block.

3. The cell stack assembly of claim 1, wherein the fastening holes of the support blocks on opposites sides of the cell stack are aligned with each other.

4. The cell stack assembly of claim 1, further comprising:
a cover that is coupled to the support blocks to cover at least one of an upper part and a lower part of the cell stack,
wherein the cover comprises through holes corresponding to the fastening holes of the support blocks where the cover contacts and is coupled to the support blocks.

5. The cell stack assembly of claim 4, wherein the support blocks and the cover are screw coupled to each other by bolts which are inserted through the through holes and into the fastening holes.

6. A battery pack comprising:
a plurality of cell stack assemblies of claim 1; and
a pack case in which the plurality of cell stack assemblies are disposed,
wherein the plurality of cell stack assemblies are arranged such that a support block on at least one side of each cell stack assembly faces a support block on a side of a neighboring cell stack assembly.

7. The battery pack of claim 6, wherein the pack case comprises bottom holes passing through a bottom of the pack case at locations corresponding to the fastening holes formed at the lower part of the support blocks, and
wherein the plurality of cell stack assemblies are coupled to the pack case by bolts inserted into the fastening holes and the bottom holes.

8. The battery pack of claim 6, further comprising:
a fixing member coupled to the support blocks of at least two cell stack assemblies of the plurality of cell stack assemblies,
wherein the fixing member comprises fixing holes at a location corresponding to the fastening holes in each of the at least two cell stack assemblies, and
wherein the fixing member is screw coupled to the support blocks by bolts inserted into the fastening holes corresponding to the fixing holes.

9. The battery pack of claim 8, wherein the fixing member is coupled at each end to two adjacent support blocks to fix a pair of cell stack assemblies of the at least two cell stack assemblies.

10. The battery pack of claim 8, wherein the fixing member extends along a longitudinal direction of two adjacent support blocks of the at least two cell stack assemblies, and
wherein the fixing holes are spaced apart along a longitudinal direction of the fixing member to correspond to the fastening holes of the two adjacent support blocks.

11. The battery pack of claim 8, wherein the fixing member is coupled to at least four support blocks of the at least two cell stack assemblies.

12. The battery pack of claim 11, wherein the fixing member extends across a cell stack included in the at least two cell stack assemblies to support an upper part of the cell stack.

13. The battery pack of claim 6, wherein the pack case comprises:
a bottom plate supporting a lower part of the plurality of cell stack assemblies disposed in the pack case; and
side walls extending along edges of the bottom plate to laterally surround the plurality of cell stack assemblies,
wherein an inner surface of the side walls comprises a seating portion protruding toward the plurality of cell stack assemblies,
wherein each support block of the plurality of cell stack assemblies comprises a protrusion protruding from at least one of a front side and a rear side of the plurality of cell stack assemblies, and
wherein each protrusion is seated on the seating portion of the side wall.

14. The battery pack of claim 13, wherein the seating portion comprises seating holes at an upper part of the seating portion,
wherein each protrusion comprises a protruding hole, and
wherein the plurality of cell stack assemblies are screw coupled to the side walls by bolts inserted into the protruding holes and the seating holes.
